# EUROPÄISCHE PATENTANMELDUNG

(11) **EP 0 864 823 A2**
(43) Veröffentlichungstag der Anmeldung: **16.09.1998**
(21) Anmeldenummer: 98103352.5
(22) Anmeldetag: 26.02.1998
(51) Int. Cl.: F24J 2/00

(54) **Schlauch zur Verwendung als Sonnenkollektor und Wärmeaustauscher**

(30) Priorität: 11.03.1997 DE 19709994
(71) Anmelder: PHOENIX AKTIENGESELLSCHAFT, 21079 Hamburg (DE)
(72) Erfinder: Friederich, Hans-Werner, Dipl.-Ing., 21423 Winsen (DE); Maass, Uwe, Dipl.-Chem., Dr., 22149 Hamburg (DE)

(57) **Zusammenfassung**

Die Erfindung betrifft einen Schlauch zur Verwendung als Sonnenkollektor und Wärmeaustauscher, umfassend
- eine Innenschicht aus elastomerem Werkstoff oder Kunststoff sowie
- einen über der Innenschicht angeordneten wärmeleitfähigen Festigkeitsträger, der mit der Innenschicht haftend verbunden ist.

Ferner werden vorteilhafte Konstruktions- und Werkstoffparameter der Innenschicht und des Festigkeitsträgers vorgestellt.

## Beschreibung

Die Erfindung betrifft einen Schlauch zur Verwendung als Sonnenkollektor und Wärmeaustauscher, wobei verschiedene Ausführungsformen bekannt sind (DE-A-25 40 495, DE-A-30 27 416, DE-A-30 38 516, DE-A-43 14 273).

Ausgehend von dem oben zitierten Stand der Technik besteht die Aufgabe darin, daß ein Schlauch bereit gestellt wird, der auch unter extremen Kollektorenbedingungen (Temperaturen bis 200°C und Drücke bis 6 bar) voll funktionstüchtig ist.

Gelöst wird diese Aufgabe erfindungsgemäß durch einen Schlauch, umfassend
- eine Innenschicht aus elastomerem Werkstoff oder Kunststoff sowie
- einen über der Innenschicht angeordneten wärmeleitfähigen Festigkeitsträger, der mit der Innenschicht haftend verbunden ist.

Im folgenden werden zweckmäßige Konstruktions- und Werkstoffparameter der Innenschicht und des wärmeleitfähigen Festigkeitsträgers genannt.

### Innenschicht

Nach einer Variante besteht die Innenschicht aus einem Werkstoff auf der Basis von EPDM, Butylkautschuk, Silikonkautschuk, Fluorkautschuk, Fluorkunststoffen oder eines bromierten Copolymeren aus Isobutylen und Methylstyrol.

Nach einer weiteren Variante kann die Innenschicht aus einer Kunststoff-Folienschicht, insbesondere aus einer Fluor-Kunststoff-Folienschicht bestehen. Dabei ist auf dieser Kunststoff-Folienschicht eine dünne Haftschicht auf Elastomerbasis aufgetragen, vorzugsweise auf der Basis von CR, NBR oder EPDM, wobei die Haftschicht eine Mindestdicke von 0,05 mm besitzt.

Die Innenschicht weist eine Dicke von 0,1 bis 2,5 mm, vorzugsweise von 0,1 bis 0,5 mm, auf, wobei bei der Verwendung einer Kunststoff-Folienschicht eine Dicke von 0,1 bis 0,3 mm vorteilhaft ist.

### Festigkeitsträger

Der Festigkeitsträger weist eine Dicke von 0,1 bis 2 mm auf.

Der Festigkeitsträger liegt ferner in Form eines Geflechtes oder einer Wendelschicht vor, wobei als Werkstoffe Stahl, Edelstahl, oberflächenbehandelter Stahl, Eisen, Kupfer oder Aluminium mit einer Wärmeleitzahl λ ≥ 10 (bei 20°) verwendet werden.

Der Festigkeitsträger zeichnet sich zudem dadurch aus, daß er in einer Bedeckung von 80 bis 100 %, vorzugsweise von 100 %, auf die Innenschicht aufgebracht ist.

Der Festigkeitsträger kann mit einer Außenschicht aus elastomerem Werkstoff oder Kunststoff abgedeckt sein, wobei vorteilhafterweise die gleichen Werkstoff wie bei der Innenschicht Verwendung finden.

Alternativ zu dieser Außenschicht kann der Festigkeitsträger mit einer Spezialbeschichtung eingefärbt, vorzugsweise schwarz eingefärbt sein.

Der haftende Verbund zwischen der Innenschicht und dem Festigkeitsträger wird üblicherweise durch Vulkanisation hergestellt, gegebenenfalls auch durch den Einsatz eines entsprechenden Klebers.

## Patentansprüche

1. Schlauch zur Verwendung als Sonnenkollektor und Wärmeaustauscher, umfassend
- eine Innenschicht aus elastomerem Werkstoff oder Kunststoff sowie
- einen über der Innenschicht angeordneten wärmeleitfähigen Festigkeitsträger, der mit der Innenschicht haftend verbunden ist.

2. Schlauch nach Anspruch 1, dadurch gekennzeichnet, daß die Innenschicht eine Dicke von 0,1 bis 2,5 mm, vorzugsweise von 0,1 bis 0,5 mm, aufweist.

3. Schlauch nach Anspruch 1 oder 2, dadurch gekennzeichnet, daß der Festigkeitsträger eine Dicke von 0,1 bis 2 mm aufweist.

4. Schlauch nach einem der Ansprüche 1 bis 3, dadurch gekennzeichnet, daß der Festigkeitsträger ein Geflecht ist.

5. Schlauch nach einem der Ansprüche 1 bis 3, dadurch gekennzeichnet, daß der Festigkeitsträger eine Wendelschicht ist.

6. Schlauch nach einem der Ansprüche 1 bis 5, dadurch gekennzeichnet, daß der Festigkeitsträger aus Stahl, Edelstahl, oberflächenbehandelten Stahl, Eisen, Kupfer oder Aluminium besteht.

7. Schlauch nach einem der Ansprüche 1 bis 6, dadurch gekennzeichnet, daß der Festigkeitsträger eine Wärmeleitzahl λ ≥ 10 (bei 20°) aufweist.

8. Schlauch nach einem der Ansprüche 1 bis 7, dadurch gekennzeichnet, daß der Festigkeitsträger in einer Bedeckung von 80 bis 100 %, vorzugsweise von 100 %, auf die Innenschicht aufgebracht ist.

9. Schlauch nach einem der Ansprüche 1 bis 8, dadurch gekennzeichnet, daß die Innenschicht aus einem Werkstoff auf der Basis von EPDM, Butylkautschuk, Silikonkautschuk, Fluorkatuschuk, Fluorkunststoffen oder eines bromierten Copolymeren aus Isobutylen und Methylstyrol besteht.

10. Schlauch nach einem der Ansprüche 1 bis 8, dadurch gekennzeichnet, daß die Innenschicht aus einer Kunststoff-Folienschicht, vorzugsweise aus einer Fluor-Kunststoff-Folienschicht besteht.

11. Schlauch nach Anspruch 10, dadurch gekennzeichnet, daß die Kunststoff-Folienschicht eine Dicke von 0,1 bis 0,3 mm besitzt.

12. Schlauch nach Anspruch 10 oder 11, dadurch gekennzeichnet, daß auf der Kunststoff-Folienschicht eine dünne Haftschicht auf Elastomerbasis aufgetragen ist, vorzugsweise auf Basis von CR, NBR oder EPDM.

13. Schlauch nach Anspruch 12, dadurch gekennzeichnet, daß die Haftschicht eine Dicke von mindestens 0,05 mm besitzt.

14. Schlauch nach einem der Ansprüche 1 bis 13, dadurch gekennzeichnet, daß der Festigkeitsträger mit einer Außenschicht aus elastomerem Werkstoff oder Kunststoff abgedeckt ist.

15. Schlauch nach Anspruch 14, dadurch gekennzeichnet, daß die Außenschicht aus dem gleichen Werkstoff wie die Innenschicht besteht, vorzugsweise in Verbindung mit den Werkstoffen gemäß Anspruch 9.

16. Schlauch nach einem der Ansprüche 1 bis 13, dadurch gekennzeichnet, daß der Festigkeitsträger mit einer Spezialbeschichtung eingefärbt, vorzugsweise schwarz eingefärbt ist.
